Europäisches Patentamt

European Patent Office

Office européen des brevets

(19)

(11) **EP 1 070 233 B1**

(12) **EUROPÄISCHE PATENTSCHRIFT**

(45) Veröffentlichungstag und Bekanntmachung des Hinweises auf die Patenterteilung:
**16.01.2002 Patentblatt 2002/03**

(21) Anmeldenummer: **99919188.5**

(22) Anmeldetag: **26.03.1999**

(51) Int Cl.$^7$: **G01J 3/04**

(86) Internationale Anmeldenummer:
**PCT/EP99/02294**

(87) Internationale Veröffentlichungsnummer:
**WO 99/51953 (14.10.1999 Gazette 1999/41)**

(54) **STEUERBARE MIKROSPALTZEILE**

CONTROLLABLE MICRO-SLIT LINE

MICRO-LIGNE A FENTES

(84) Benannte Vertragsstaaten:
**AT DE FR GB IT**

(30) Priorität: **06.04.1998 DE 19815079**

(43) Veröffentlichungstag der Anmeldung:
**24.01.2001 Patentblatt 2001/04**

(73) Patentinhaber:
- **INSTITUT FÜR PHYSIKALISCHE HOCHTECHNOLOGIE E.V.**
 **07745 Jena (DE)**
- **Piezosystem Jena Präzisionsjustierelemente GMBH**
 **07745 Jena (DE)**

(72) Erfinder:
- **GÖTZ, Bernt**
 **D-07751 Zöllnitz (DE)**
- **MARTIN, Thomas**
 **D-07745 Jena (DE)**
- **RIESENBERG, Rainer**
 **D-07749 Jena (DE)**
- **SEIFERT, Thomas**
 **D-07743 Jena (DE)**

(74) Vertreter: **Pfeiffer, Rolf-Gerd, Dipl.-Phys.**
 **Patentanwaltsbüro Pfeiffer & Partner Winzerlaer Strasse 10**
 **07745 Jena (DE)**

(56) Entgegenhaltungen:
**DE-A- 3 133 828    DE-A- 4 017 317**
**US-A- 4 259 014**

EP 1 070 233 B1

## Beschreibung

Die Erfindung betrifft eine steuerbare Mikrospaltzeile für Spektrometer, die insbesondere in einem Hadamardspektrometer Verwendung finden soll.

Aus dem Stand der Technik sind vielfältige Spektrometer bekannt. So wird in DE 40 17 317 A1 ein Fotodioden-Array-Spektrometer beschrieben, bei dem durch eine mechanische Verschiebung der einzelnen optisch wirksamen Elemente eines Polychromators eine Erhöhung der spektralen Auflösung erreicht werden soll. Die entsprechenden optischen Elemente sind ein Eintrittsspalt, ein dispergierendes Gitter und Photodiodenzeile. Jedes dieser Elemente kann durch einen mechanischen Antrieb und dazu gehörende Mittel zur Erzeugung von Verlagerungssignalen bewegt werden.
In DE 35 44 512 C2 wird versucht, das Auflösungsvermögen durch eine möglichst gute Anpassung der Fokalkurve eines Spektrometers mit abbildendem Konkavgitter mittels weiterer optischer Bauelemente (Spiegel) zu erhöhen. Die Wirkung beruht darauf, daß das erzeugte Spektrum weitgehend geebnet und damit an den ebenen Fotodioden-Array-Empfänger möglichst gut angepaßt wird. Die spektrale Auflösung kann damit nicht wesentlich verbessert werden; bestenfalls erreicht man eine Auflösung, die der doppelten diskreten Pixelbreite entspricht.
Wie bei den beiden genannten Schriften für spektroskopische Zweckes so wird auch für Bildverarbeitung mit einer Verschiebung eines Bildes gegen einen Empfänger gearbeitet.
In EP 65 885 A1 wird das Bild periodisch gegenüber dem Array-Empfänger bewegt. Aus mehreren geringfügig gegeneinander versetzten Bildern wird ein Bild mit höherem Auflösungsvermögen gewonnen.
In den Schriften EP 131 387 A1 und EP 65 885 A1 wird das Auflösungsvermögen durch eine Schwingungsbewegung des Array-Empfängers gegenüber dem Bildentstehungsort verbessert.
Es ist in der Spektroskopie bekannt, mittels mehrerer zueinander paralleler Eintrittsspalte Spektren zu erzeugen.
In DE 31 33 828 A1 wird eine Anordnung beschrieben, bei der ein erstes verschiebbares Spaltelement mit mehreren Spalten gegen ein zweites bewegliches Spaltelement verschoben wird. Zweck der Anordnung ist es, den Eintrittsspalt definiert zu verstellen, um eine hohe Einstellgenauigkeit der Breite mit geringem Aufwand zu erhalten. Ein Bezug auf die Dimensionen des Empfängers spielt in dieser Schrift keine Rolle.
In DE 34 06 645 A1 werden durch mehrere räumlich feststehende Eintrittsspalte in Verbindung mit Lichtleitfasern und einer Unterbrecheranordnung, die jeweils nur einen Eintrittsspalt wirksam werden läßt, Spektren erzeugt, die bezüglich der Wellenlänge gegeneinander versetzt sind. Diese parallele Anordnung von mehreren Eintrittsspalten erfordert keinen Spaltabstand, der in irgendeiner Weise mit dem spektralen Auflösungsvermögen in Beziehung steht. Der Abstand wird aus rein mechanischen Gründen so gewählt, daß die Lichtleiter in parallelen Reihen angeordnet werden können. Da der Ursprung der einzelnen Spektren verschiedenen Proben entspricht, ist es auch nicht vorgesehen, mehrere Spektren elektronisch so miteinander zu verarbeiten, daß ein höheres spektrales Auflösungsvermögen erreicht wird.
In US-PS 4,259,014 werden ebenfalls mehrere räumlich feststehende Eintrittsspalte zur Erzeugung mehrerer gegeneinander verschobener Spektren angewendet. Dabei ist es das Ziel, ein langes eindimensionales Spektralband in mehrere Teilspektren zu zerlegen, die auf einem zweidimensionalen Array-Empfänger, der in beiden Dimensionen eine wesentlich geringere Ausdehnung hat als das genannte eindimensionale Spektralband, übereinander liegen. Die Lage der Eintrittsspalte wird nur nach dem Gesichtspunkt der möglichst guten Ausfüllung des Array-Empfängers gewählt. Eine Verarbeitung der Teilspektren miteinander zum Zweck der Erhöhung der Auflösung ist hier nicht Gegenstand der Erfindung und wäre mit dieser Lösung auch nicht möglich.
In DE 39 39 148 A1 wird ebenfalls mit räumlich feststehenden Eintrittsspalten gearbeitet, die so angeordnet sind, daß die 1. und die -1. Spektralordnung eines Spektrometers auf ein und demselben Array-Empfänger abgebildet werden. Dabei liegen die Spektren räumlich weit auseinander und es gibt wie bei DE 34 06 645 A1 und US-PS 4,259,014 keinen Zusammenhang zwischen den Spaltbreiten bzw. Spaltabständen zu den mechanischen Array-Parametern.

Alle bekannten Anordnungen zeichnen sich durch einen relativ komplizierten Aufbau aus, der vornehmlich in teurerenn und langsamen Tischgeräteausführungen von Spektrometern zur Anwendung gelangt.

Der Erfindung liegt die Aufgabe zugrunde, eine steuerbare Mikrospaltzeile für Spektrometer anzugeben, die den Aufbau eines kostengünstigen und schnellen Array-Spektrometers mit vergleichbarer Leistungsfähigkeit zu Tischgeräten ermöglicht und zudem als Kompaktgerät ausbildbar ist.

Die Aufgabe wird durch die kennzeichnenden Merkmale des Patentanspruchs 1 gelöst. Vorteilhafte weitere Ausgestaltungen sind durch die nachgeordneten Ansprüche erfaßt.

Die Erfindung soll nachstehend anhand schematischer Ausführungsbeispiele näher erläutert werden. Es zeigen:

Fig. 1      schematisch den Aufbau eines Array-Spektrometers mit seinen wesentlichen Baugruppen und einer beispielhaften Mikrospaltzeile nach vorliegender Erfindung.

Fig. 2      eine Mikrospaltzeile mit ihren wesentlichen Elementen in vergrößerter Darstellung,

Fig. 3a bis 3d      vier Schaltstellungen der Mikrospalt-

| | |
|---|---|
| | zeile mit vier Spalten nach Fig. 2, |
| Fig. 4a bis 4d | die zugehörigen Spaltbilder nach den Schaltstellungen entsprechend der Figuren 3a bis 3d, |
| Fig. 5a | eine erste Stegzeile für einen Mikrospalt mit sieben Spalten. |
| Fig. 5b | eine zweite Stegzeile für einen Mikrospalt mit sieben Spalten mit einer definiert vorgegebenen bevorzugten Stegverteilung, |
| Fig. 6a bis g | sieben verschiedene Schaltstellungen der Stegzeile bei Einsatz einer Mikrospaltzeile nach Fig. 5b, |
| Fig. 7a bis 7g | die zugehörigen Spaltbilder nach den Schaltstellungen entsprechend der Figuren 6a bis 6g, |
| Fig. 8a | eine perspektivische Darstellung von sich gegenüberstehenden mit Spalt bzw. Stegen versehenen Membranen nach den Figuren 2 oder 3 und |
| Fig. 8b | eine Variante einer Ausführung nach Figur 8a, die vornehmlich bei Verwendung von Infrarotdetektoren in der Detektorarrayzeile zur Anwendung gelangt. |

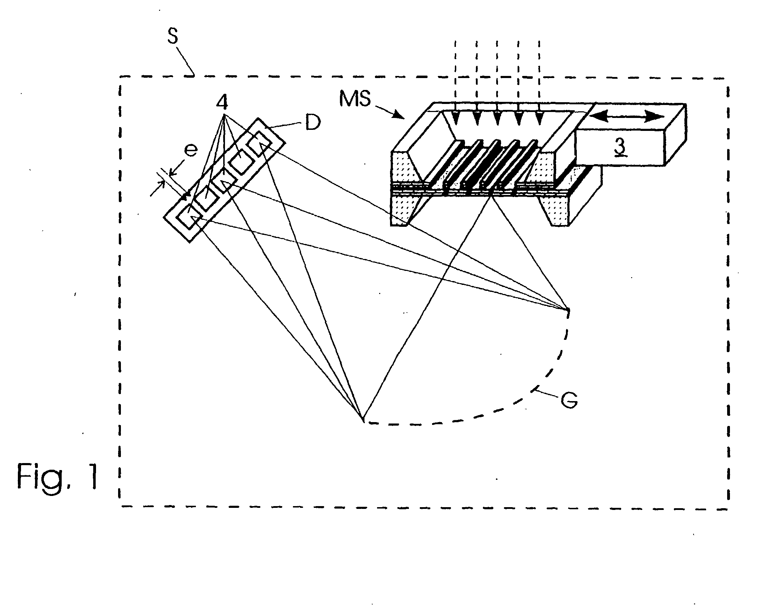

In Figur 1 ist schematisch der Aufbau eines Array-Spektrometers S dargestellt. Dieses enthält zunächst als spektrometertypische Baugruppen ein Detektorarray D mit den Einzelempfängerflächen 4, die zueinander in einem Abstand e bis herunter auf 1 μm derzeit verfügbar sind. Weiterhin enthält das Spektrometer S ein übliches Polychromatorgitter G, das die spektrale Zerlegung der auftreffenden, und von einem Spalt herrührenden Strahlung bewirkt. An dieser Stelle setzt die Erfindung an, indem eine mit einem Verstellmittel 3 steuerbare Mikrospaltzeile MS zum Einsatz gelangt.

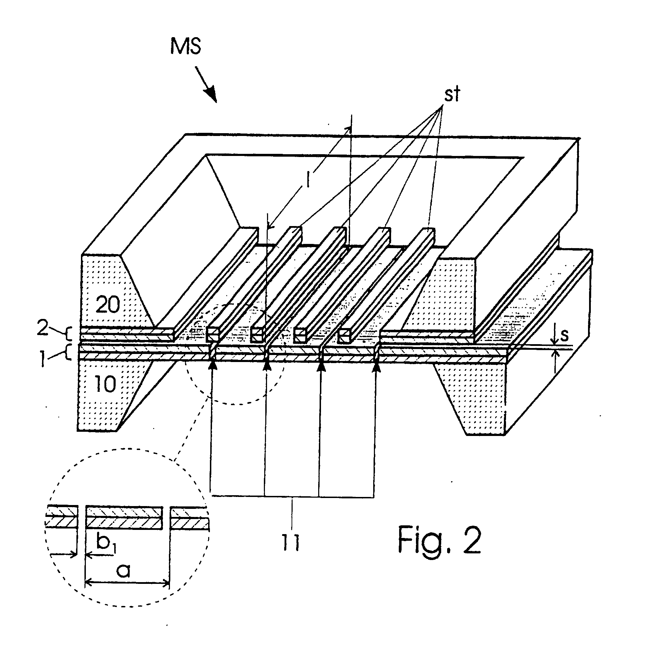

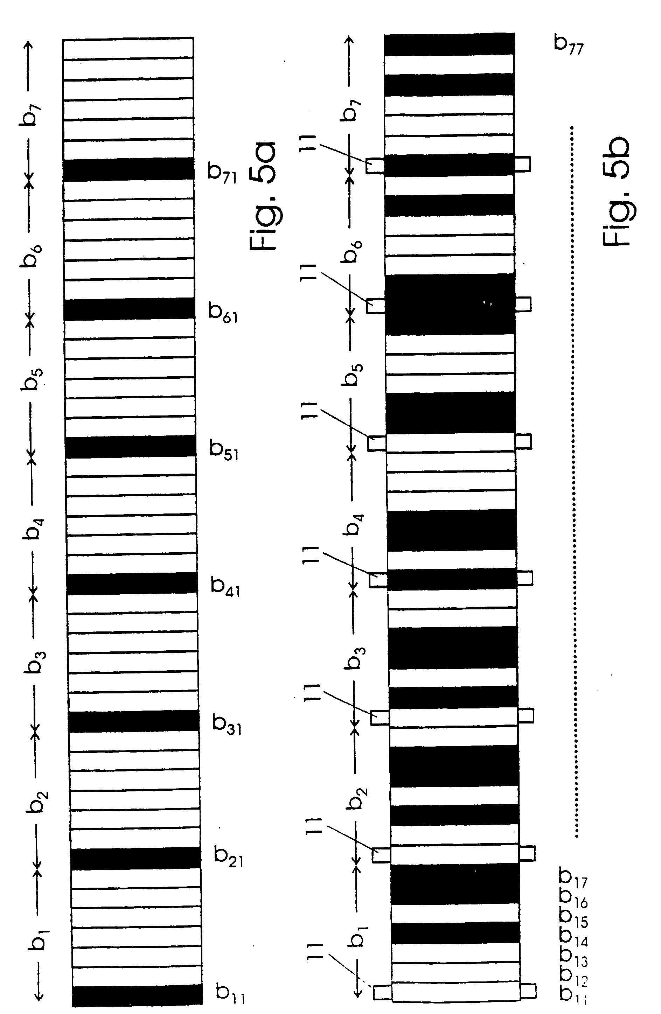

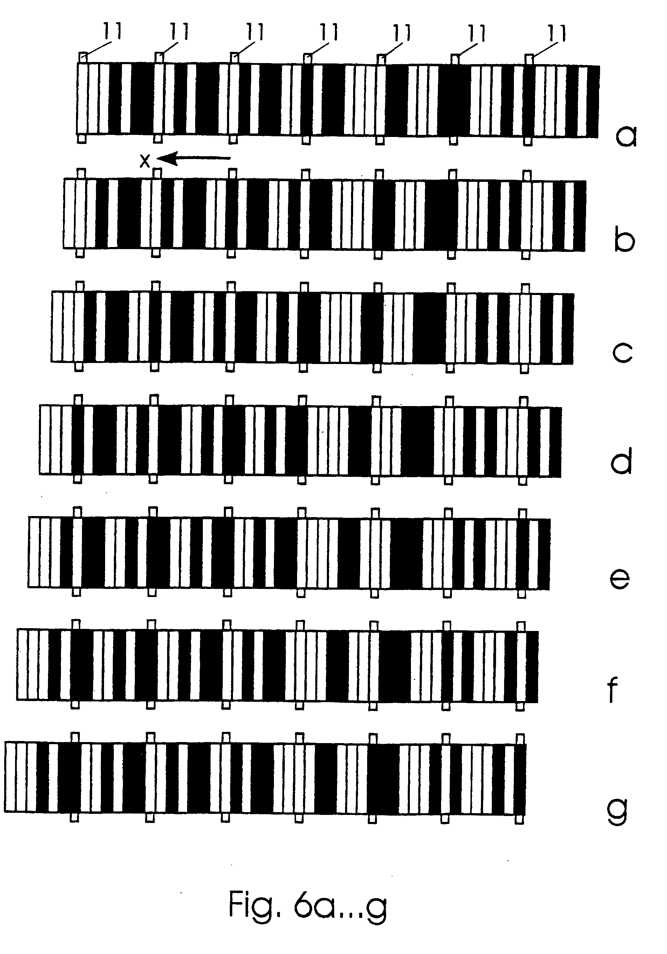

Figur 2 zeigt diese steuerbare Mikrospaltzeile MS in perspektivischer und teilweise geschnittener Darstellung detaillierter. Die Mikrospaltzeile MS besteht zunächst aus einer ersten Membran 1, die im Beispiel aus einem Doppelschichtsystem einer Schichtfolge aus $SiO_2$ und $Si_3N_4$, das auf einem Siliziumsubstrat aufgebracht wurde, welches mittels mikrosystemtechnischer Methoden eine Tiefenätzung derart erfahren hat, daß ein Si-Rahmen 10 verbleibt und die Membran 1 Spalte 11 in einem äquidistanten Abstand beinhaltet. Die Gesamtdicke der Membran 1 und der nachstehend beschriebenen zweiten Membran 2 beträgt 1 μm bei einer Fläche von ca. $10 \cdot 10 \ mm^2$. Die Spalte 1 weisen im Beispiel eine Spaltbreite $b_1$ von 30 μm, eine Spaltlänge 1 von 500 μm und einen Mittenabstand a der Spalte von 187,5 μm auf. Die jeweils konkreten Bemaßungen hängen im wesentlichen von den vorgegebenen optischen Abbildungsverhältnissen im Spektrometer S und dem Abstand e der einzelnen Empfängerflächen 4 in dem zum Einsatz gelangenden Zeilendetektor D ab. Im Beispiel wird von einem Abbildungsmaßstab von 0,81 und einer Detektorzeile mit 1024 Elementen mit einem jeweiligen Mittenabstand von 25 μm ausgegangen. In einem technologisch realisierbaren Abstand s, der im Beispiel 8 μm beträgt, ist der ersten Membran 1 eine zweite Membran 2 zugeordnet, die von einem Rahmen 20 getragen und gehaltert ist, und die auf analoge Weise zur ersten Membran 1 gefertigt wurde. Diese zweite Membran 2 ist mit Stegen st versehen, deren Länge zunächst der Länge 1 der Spalte 11 der ersten Membran entspricht. Den Stegen st ist weiterhin eine Breite d gegeben, die sich bemißt nach der Spaltbreite $b_1$ der Spalte 11 zuzüglich dem Zweifachen einer Überdeckungsbreite c, die durch den Abstand s der ersten von der zweiten Membran und der Apertur eines Spalts 11 bestimmt ist. Im Beispiel beträgt die einfache Überdeckungsbreite 3,75 μm, wodurch sich die Stegbreite zu 37,5 μm bemißt. Weiterhin steht die Beabstandung der Stege st in einer engen Korrelation zum Mittenabstand a der Spalte 11 in der ersten Membran, die an einem speziellen Ausführungsbeispiel nach den Figuren 5b und 6a bis 6g näher erläutert werden wird.

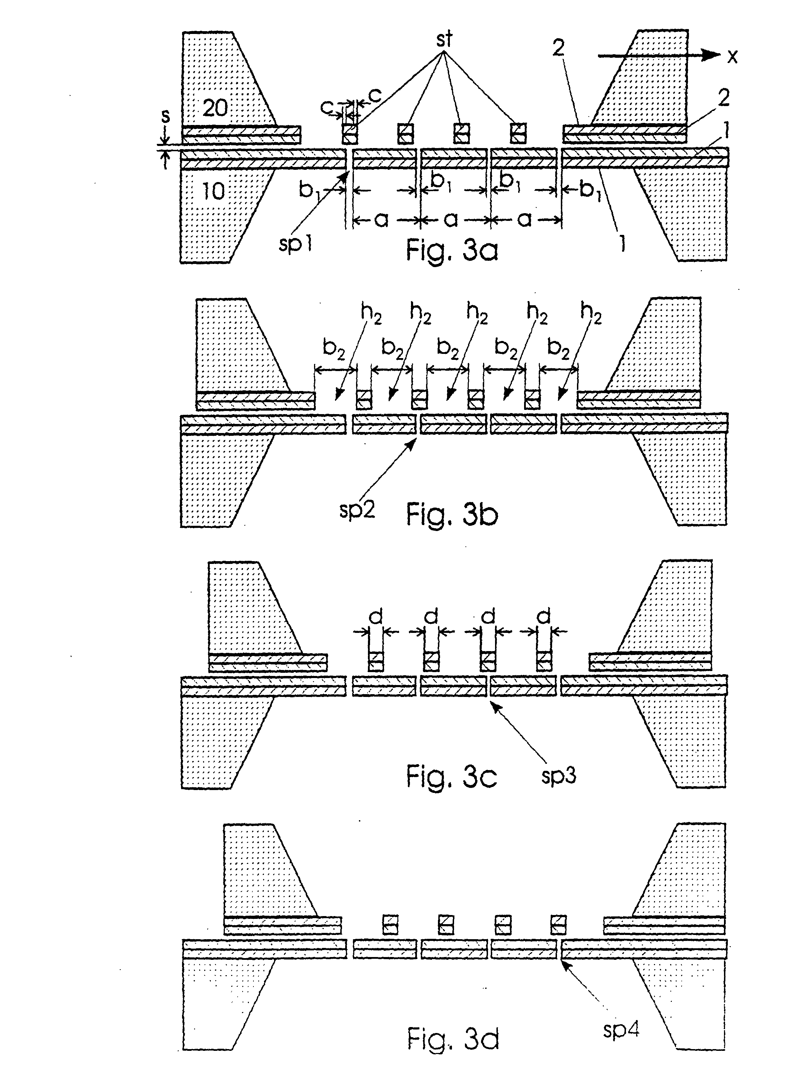

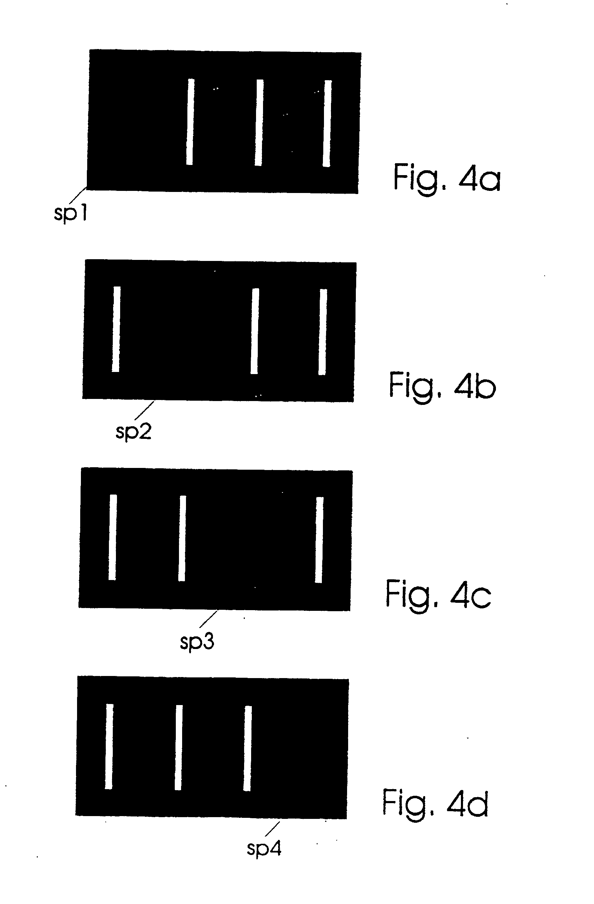

Zunächst erfolgt eine detailliertere Beschreibung der wesentlichen Funktionsgruppen der Mikrospaltzeile anhand der Figuren 3a bis 3d, in denen eine Mikrospaltzeile mit vier Spalten 11 in der Membran 1 und vier Stegen st in der Membran 2 in einem seitlichen Schnitt dargestellt sind. Die zwischen den Stegen der Breite d befindlichen Ausnehmungen sind mit $h_2$ und die Breite dieser Ausnehmungen mit $b_2$ bezeichnet, alle übrigen Bezeichnungen wurden bereits oben genannt. Der Rahmen 20 der zweiten Membran 2, wird von einem in den Figuren 3a bis 3d nicht näher dargestellten Verstellmittel, für das insbesondere ein piezoelektrischer Antrieb 3 zum Einsatz gelangt, erfaßt. Die Fig. 3a stellt die relative Ausgangslage der zweiten Membran 2 zur ersten Membran 1 dar, bei der die Stege st so die Spalte 11 der ersten Membran 1 erfassen, daß lediglich der erste Spalt sp1 eine Abdeckung vom ersten Steg der zweiten Membran erfährt; alle übrigen Spalte 11 lassen die auf die Stegzeile (Membran 2) einfallende Strahlung hindurch und zum in den Figuren 3a bis 3d ebenfalls nicht dargestellten Polychromator G gelangen. Nach Erfassung der erhaltenen Spektren durch die Detektorzeile D und entsprechender elektronischer Weiterverarbeitung, die nicht Gegenstand vorliegender Erfindung und deshalb auch nicht beschrieben ist, bewirkt das Verstellmittel 3 eine definierte Verschiebung der zweiten Membran in x-Richtung derart, daß durch den zweiten Steg st, von links betrachtet (vgl. Fig. 3b), der zweite Spalt sp2 abgedeckt wird, wohingegen alle übrigen Spalte in Durchlaßrichtung versetzt sind. Durch eine weitere gleichdefinierte Verschiebung in x-Richtung erfolgt ein weiterer Versatz der Stege st, so daß in Fig. 3c nur der dritte Spalt sp3 und nach weiterer Verschiebung nur der vierte Spalt sp4 von dem jeweiligen Steg st abgedeckt sind, wohingegen jeweils alle übrigen Spalte der Membran 1 in Durchlaßrichtung versetzt sind. Die jeweils zugehörigen Spaltbilder nach den Schaltstellungen entsprechend der Figuren 3a bis 3d sind als Ansicht der Membran 1 von unten in den Figuren 4a bis 4d zur Verdeutlichung nochmals dargestellt.

Auf diese Weise sind im beschriebenen Beispiel in vier verschiedenen Schaltstellungen der zweiten Membran vier verschiedene Spektren einer Auswertung zuführbar, wodurch man eine Subpixelauflösung erreicht, bei gleichen Lichtverhältnissen und schmaleren Spalten in Zusammenhang mit einer höheren Auflösung einsetzen kann oder das Signal/Rausch-Verhältnis um den Faktor $\sqrt{3}$ erhöht.

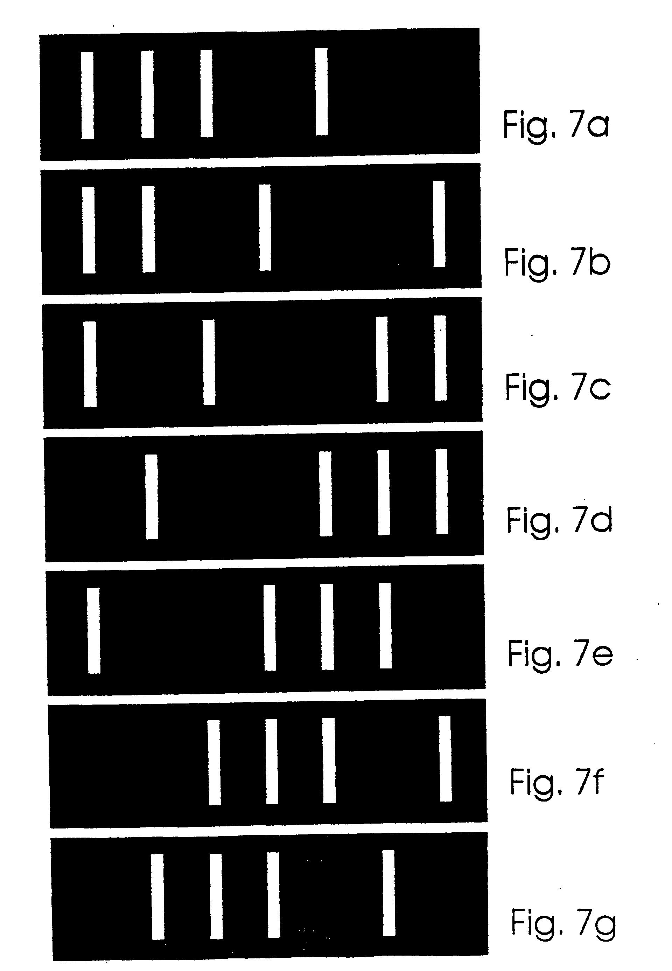

Anhand der Figuren 5a und insbesondere 5b und 6a bis 6g zuzüglich 7a bis 7g soll die oben genannte Korrelation der Dimensionierung der Stege der zweiten Membran zum Mittenabstand der Spalte 11 der ersten Membran näher ausgeführt werden. Fig. 5a zeigt zunächst eine Ausführung der zweiten Membran bei der sieben Stege vorgesehen sind, die in Fig. 5a schwarz ausgelegt und in einem äqidistanten Abstand zueinander, analog zur Ausführung nach den Figuren 2 und 3, angeordnet sind. Bei einer solchen Ausführung würde die in Fig. 5a nicht dargestellte erste Membran 1 mit sieben Spalten versehen sein, die einen entsprechend größeren Mittenabstand a zueinander aufweisen. Eine Verschiebung der zweiten Membran 2 in äquidistanten Schritten um jeweils ein 7faches der Stegbreite d würde ein zu den Figuren 4a bis 4d entsprechendes Spaltbild ergeben. Interessanter ist jedoch eine in Figur 5b beispielhaft dargestellte Ausbildung der Stege. In Fig. 5b sind die sieben, in der Membran 1 vorgesehenen Spalte 1 zur Verdeutlichung überhöht dargestellt. Wie aus der Fig. 5b ersichtlich, ist die zweite Membran 2 in sieben Bereiche $(b_{1-7})$ mit jeweils sieben Unterbereichen $(b_{x1-x7})$, mit x = 1 ... 7, unterteilt, deren Breite jeweils zu $d = b_1 + 2c$, mit c als einer Überdeckungsbreite, die durch den Abstand s zwischen der ersten und zweiten Membran 1, 2 und der Apertur eines Spaltes 11, wie oben beschrieben, bestimmt ist, festgelegt ist, wobei wenigstens ein Unterbereich $(b_{x1-x7})$ eines jeden Bereiches $(b_{1-7})$ als nicht transparenter Steg st und die verbleibenden Unterbereiche als Ausnehmuneen $h_2$ in der Membran 2 ausgebildet sind, wobei die Gesamtanzahl der Bereiche $(b_{1-7})$ identisch zur Anzahl der Spalte 11 in der ersten Membran 1, hier sieben, festgelegt ist und die erste und zweite Membran 1, 2 vermittels eines Verstellmittels hier in sechs diskreten Schritten einer Schrittweite d gegeneinander derart und soweit verschiebbar sind, daß jeder der Spalte 11, die in einem äquidistanten Mittenabstand a, wobei a zu $a = n \cdot d$ festgelegt ist, in der ersten Membran 1 eingebracht sind, wenigstens einmal einen optischen Verschluß durch einen Steg st der zweiten Membran 2 erfährt. Dabei ist weiterhin vorgesehen, daß bei jedem der vorgesehenen Bereiche $(b_{1-7})$ und diesen zugeordneten Unterbereichen $(b_{x1-x7})$ mehrere Unterbereiche als nicht transparente Stege st und die verbleibenden Unterbereiche als Ausnehmungen $h_2$ in der Membran 2 ausgebildet sind, wobei die Anzahl der Stege st pro Bereich $(b_{1-7})$ stets gleich groß festgelegt ist. Weiterhin ist vorgesehen, daß die Anzahl der Ausnehmungen $(h_2)$ pro Bereich $(b_{1-7})$ stets größer als die Anzahl der Stege (st) pro Bereich $(b_{1-7})$ festgelegt ist. Es soll ferner vorgesehen sein, daß die Position der pro Bereich $(b_{1-7})$ vorgesehenen Stege st von Bereich $(b_1)$ bis Bereich $(b_7)$ unterschiedlich, jedoch in ganzzahligen Vielfachen der Stegbreite d festgelegt ist. In der dargestellten Ausführungsform ist die Verteilung der pro Bereich $(b_{1-7})$ vorgesehenen Stege (st) entsprechend einem Hadamard-Theorem festgelegt. Eine definierte Verschiebung der zweiten Membran 2, wie in Fig. 5b dargestellt, zur ersten Membran 1 um jeweils einen Vorschub der Länge d, zeigt die sieben aufeinanderfolgenden möglichen Positionen, wie es in den Figuren 6a bis 6g schematisch angedeutet ist. Die jeweils zugehörigen Spaltbilder sind in den Figuren 7a bis 7g dargestellt, wobei Fig. 7a zu Fig. 6a gehört usw.. Der Schaltalgorithmus folgt dabei einer Hadamard-Matrix der Gestalt:

$$
\begin{bmatrix}
1 & 1 & 1 & 0 & 1 & 0 & 0 \\
1 & 1 & 0 & 1 & 0 & 0 & 1 \\
1 & 0 & 1 & 0 & 0 & 1 & 1 \\
0 & 1 & 0 & 0 & 1 & 1 & 1 \\
1 & 0 & 0 & 1 & 1 & 1 & 0 \\
0 & 0 & 1 & 1 & 1 & 0 & 1 \\
0 & 1 & 1 & 1 & 0 & 1 & 0
\end{bmatrix}
$$

Dadurch wird ein maximales Signal/Rausch-Verhältnis unter Berücksichtigung aller Fluktuationsquellen erreicht.

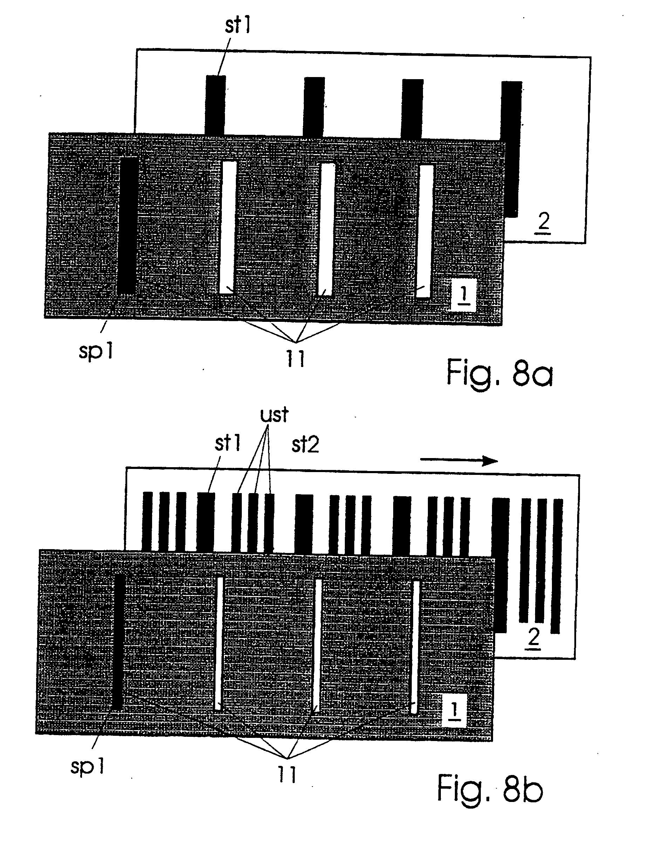

In Figur 8a ist schließlich nochmals die Position der beiden Membranen 1 und 2 nach Fig. und Fig. 3a in perspektivischer und bzgl. ihres Abstands stark überzeichneter Darstellung verdeutlicht. In Figur 8b ist eine Variante eines Ausführungsbeispiels dargestellt, die vornehmlich bei Verwendung von Infrarotdetektoren in der Detektorarrayzeile zur Anwendung gelangt, bei der, bei identisch festgelegter Beabstandung der Spalte 11 der ersten Membran 1 und Festlegung der Stege st in der zweiten Membran 2 zusätzlich zwischen den Stegen st der zweiten Membran 2 weitere äquidistante Unterstege ust mit einer gegenüber der Breite der Stege st verringerten Breite vorgesehen sind und die Breite $b_1$ der Spalte 11 der ersten Membran 1 auf die Breite der Unterstege ust reduziert festgelegt ist. Dadurch erreicht man während der Lateralverschiebung der zweiten Membran 2 gleichzeitig eine Modulation des pro Spalt durchgelassenen Lichtes, was die Auswertung die Auswertung der von thermischen Detektoren empfangenen Signale z.B. für Spektrometer im IR-Bereich wesentlich vereinfacht. Die Bemessung der Breite der Stege st erfolgt dabei ebenfalls nach vorherigen Maßgaben.

In allen beschriebenen Ausführungsbeispielen sind die sich unmittelbar gegenüberstehenden Membranflächen der Membranen 1 und 2 mit einer für die zum Einsatz gelangenden Strahlung nicht transparenten Oberflächenbelegung versehen, die insbesondere durch eine absorbierende Oberflächenbelegung, wie z. B. einer Aluminiumbelegung oder Schwarzschicht, gebildet ist.

Unter Verwendung der erfindungsgemäßen Mikrospaltzeile gemäß den dargestellten Ausführungsbeispielen erreicht man eine Auflösung der Spektren, die der von teuren und langsameren Tischgeräten entspricht. Die pixelbegrenzte Auflösung der Detektorzeile wurde gegenüber der herkömmlicher Diodenarrayspetrometern soweit erhöht, daß das preiswerter herstellbare Spektrometer ebenfalls die Leistungsfähigkeit - von Tischgeräten erreicht.

Ein solches miniaturisiertes Spektrometer wird in seinen Maßen im wesentlichen vom abbildenden Gitter bestimmt und kann Dimensionen von (5 · 5 · 5) cm erreichen.

Bezugszeichenliste

| | |
|---|---|
| 1 - | erste Membran |
| 10, 20 - | Rahmen |
| 11 - | Spalte |
| 2 - | zweite Membran |
| 3 - | Verstellmittel |
| 4 - | Einzelempfängerflächen |
| a - | Mittenabstand der Spalte 11 |
| b1 - | Spaltbreite der Spalte 11 |
| b2 - | Breite der Ausnehmungen in der zweiten Membran |
| d - | Stegbreite |
| D - | Detektorzeile |
| e - | Abstand der Einzelempfängerflächen |
| h2 - | Ausnehmungen der zweiten Membran |
| I - | Länge der Spalte 11 und Stege st |
| MS - | Mikrospaltzeile |
| S - | Spektrometer |
| sp1...sp4 - | abgedeckte Spalte |
| st - | Stege |
| ust - | Unterstege |
| x - | Verstellrichtung |

**Patentansprüche**

1. Steuerbare Mikrospaltzeile (MS) für Spektrometer, **dadurch gekennzeichnet, daß**

   - eine erste Membran (1) vorgesehen ist, die n identische Spalte (11), wobei n > 2 ist, beinhaltet, deren Mittenabstand (a), deren Spaltbreite $b_1$ und deren Spaltenlänge (I) im wesentlichen bestimmt sind durch die optischen Abbildungsverhältnisse und Dimensionierung im Spektrometer (S) und dem Abstand (e) der Einzelempfängerflächen (4) eines zum Einsatz gelangenden Zeilendetektors (D), der

   - ersten Membran eine zweite Membran (2) in einem technologisch realisierbaren, möglichst geringen Abstand (s) zugeordnet ist, die in einer Verschiebungsrichtung (x) in n Bereiche $(b_{1-n})$ mit jeweils n Unterbereichen $(b_{x1-xn})$, mit x = 1 ... n, unterteilt ist, deren Breite jeweils zu $d = b_1 + 2c$, mit c als einer Überdeckungsbreite, die durch den Abstand (s) zwischen der ersten und zweiten Membran (1; 2) und der Apertur eines Spaltes (11) bestimmt ist, festgelegt ist, wobei wenigstens ein Unterbereich $(b_{x1-x7})$ eines jeden Bereiches $(b_{1-n})$ als nicht transparenter Steg (st) und die verbleibenden Unterbereiche als Ausnehmungen $(h_2)$ in der Membran (2) ausgebildet sind, wobei die Gesamtanzahl der Bereiche $(b_{1-n})$ identisch zur Anzahl der Spalte (11) in der ersten Membran (1) festgelegt ist und

   - die erste und zweite Membran (1; 2) vermitteis eines Verstellmittels (3) in (n - 1) diskreten Schritten einer Schrittweite d gegeneinander derart und soweit verschiebbar sind, daß jeder der Spalte (11), die in einem äquidistanten Mittenabstand a, wobei a zu a = n.d festgelegt ist, in der ersten Membran (1) eingebracht sind, wenigstens einmal einen optischen Verschluß durch einen Steg (st) der zweiten Membran (2) erfährt.

2. Steuerbare Mikrospaltzeile nach Anspruch 1, **dadurch gekennzeichnet, daß** bei jedem der vorgesehenen Bereiche $(b_{1-n})$ und diesen zugeordneten Unterbereichen $(b_{x1-xn})$ mehrere Unterbereiche als nicht transparente Stege (st) und die verbleibenden Unterbereiche als Ausnehmungen $(h_2)$ in der Membran (2) ausgebildet sind, wobei die Anzahl der Stege (st) pro Bereich $(b_{1-n})$ stets gleich groß festgelegt ist.

3. Steuerbare Mikrospaltzeile nach Anspruch 2, **dadurch gekennzeichnet, daß** die Anzahl der Ausnehmungen $(h_2)$ pro Bereich $(b_{1-n})$ stets größer als die Anzahl der Stege (st) pro Bereich $(b_{1-n})$ festgelegt ist.

4. Steuerbare Mikrospaltzeile nach Anspruch 2 und 3, **dadurch gekennzeichnet, daß** die Position der pro Bereich $(b_{1-n})$ vorgesehenen Stege (st) von Bereich $(b_1)$ bis Bereich $(b_n)$ unterschiedlich, jedoch in ganzzahligen Vielfachen der Stegbreite d festgelegt ist.

5. Steuerbare Mikrospaltzeile nach den Ansprüchen 2 bis 4, **dadurch gekennzeichnet, daß** die Vertei-

lung der pro Bereich (b$_{1-n}$) vorgesehenen Stege (st) entsprechend einem Hadamard-Theorem festgelegt ist.

6. Steuerbare Mikrospaltzeile nach Anspruch 1, **dadurch gekennzeichnet, daß** die Membranen (1; 2) mit Ihren Spalten (11) oder Ausnehmungen (h) und ein sie tragender Rahmen (10; 20) durch einen mikrostrukturierten Chip gebildet sind.

7. Steuerbare Mikrospaltzeile nach Anspruch 6, **dadurch gekennzeichnet, daß** der Chip durch ein Siliziumsubstrat gebildet ist, das zumindest einseitig mit einem die verbleibenden Membranbereiche bildenden Doppelschichtsystem einer Schichtfolge aus SiO$_2$ und Si$_3$N$_4$ versehen ist.

8. Steuerbare Mikrospaltzeile nach Anspruch 1 oder (6 und 7), **dadurch gekennzeichnet, daß** die erste Membran (1) starr angeordnet ist und einzig die zweite Membran (2) vom Verstellmittel (3) erfaßt ist.

9. Steuerbare Mikrospaltzeile nach Anspruch 1 und 8, **dadurch gekennzeichnet, daß** das Verstellmittel (3) durch einen piezoelektrischen Antrieb gebildet ist.

10. Steuerbare Mikrospaltzeile nach einem der Ansprüche 1, 6 oder 7, **dadurch gekennzeichnet, daß** die sich unmittelbar gegenüberstehenden Membranflächen der Membranen (1; 2) mit einer für die zum Einsatz gelangenden Strahlung nicht transparenten Oberflächenbelegung versehen sind.

11. Steuerbare Mikrospaltzeile nach Anspruch 10, **dadurch gekennzeichnet, daß** die nichttransparente Oberflächenbelegung durch eine die zum Einsatz gelangenden Strahlung absorbierende Oberflächenbelegung gebildet ist.

12. Steuerbare Mikrospaltzeile nach Anspruch 1, **dadurch gekennzeichnet, daß** bei identisch festgelegter Beabstandung der Spalte (11) der ersten Membran (1) und Festlegung der Stege (st) in der zweiten Membran (2) zusätzlich zwischen den Stegen (st) der zweiten Membran (2) weitere äquidistante Unterstege (ust) mit einer gegenüber der Breite der Stege (st) verringerten Breite vorgesehen sind und die Breite b$_1$ der Spalte (11) der ersten Membran (1) auf die Breite der Unterstege reduziert festgelegt ist.

**Claims**

1. Controllable micro-slit line (MS) for spectrometers, **characterized in that**

- there is provided a first membrane (1) comprising n identical slits (11), with n > 2, the central distance (a), slit width (b$_1$), and the slit length (1) of said slits (11) being substantially determined by the optical imaging ratio and the dimensioning in the spectrometer (S) and by the distance (e) of the single detector areas (4) of a line detector (D) used,

- a second membrane (2) being correlated to said first membrane (1) at a distance (s) as narrow as possible and being adapted to be realized technologically, said second membrane being subdivided in one direction of displacement (x) into n ranges (b$_{1-n}$) with n sub-ranges (b$_{x1-xn}$) each, where x = 1...n, the width of each of which is defined as d = b$_1$+2c, where c is the covering width determined by the distance (s) between the first and the second membrane (1, 2) and by the aperture of a slit 11, wherein at least one sub-range (b$_{x1-xn}$) of each range (b$_{1-n}$) is designed as a non-transparent cross-barrier (st) and the remaining sub-ranges as recesses (h$_2$) in the membrane (2), whereby the entire number of ranges (b$_{1-n}$) is determined identically to the number of slits (11) in the first membrane (1), and

- said first and said second membrane (1, 2) are displaceable by a displacement means (3) in (n-1) discrete steps of a step width (d) relative to each other in such a way and so far that each of the slits (11) that are provided in the first membrane (1) at an equidistant central distance a̲, wherein a̲ is a = n · d, are at least once optically shut by a cross-barrier (st) of the second membrane (2).

2. Controllable micro-slit line as claimed in claim 1, **characterized in that** in each of the provided ranges (b$_{1-n}$) and the sub-range (b$_{x1-xn}$) associated thereto, several of said sub-ranges are designed as non-transparent cross-barriers (st) and the remaining sub-ranges as recesses (h$_2$) in the membrane (2), whereby the number of cross-barriers (st) per range (b$_{1-n}$) is always defined as equally great.

3. Controllable micro-slit line as claimed in claim 2, **characterized in that** the number of recesses (h$_2$) per range (b$_{1-n}$) is always defined greater than the number of cross-barriers (st) per range (b$_{1-n}$).

4. Controllable micro-slit line as claimed in claims 2 and 3, **characterized in that** the position of the cross-barriers (st) provided per range (b$_{1-n}$) is different from range (b$_1$) to range (bn), however, defined as multiple integers of the cross-barrier width d.

5. Controllable micro-slit line as claimed in claims 2 to 4, **characterized in that** the distribution of the cross-barriers (st) provided per range ($b_{1-n}$) is defined in accordance with a Hadamard theorem.

6. Controllable micro-slit line as claimed in claim 1, **characterized in that** the membranes (1; 2) with their slits (11) and recesses (h), respectively, and a frame (10; 20) supporting the former are formed by a micro-structurized chip.

7. Controllable micro-slit line as claimed in claim 6, **characterized in that** said chip is formed by a silicon substrate that is provided with a double-layer system of a layer sequence from $SiO_2$ and $Si_3N_4$ which constitutes the remaining membrane ranges on at least one of its sides.

8. Controllable micro-slit line as claimed in claim 1 or (6 and 7), **characterized in that** said first membrane (1) is non-displaceably arranged and only the second membrane (2) is engaged by the displacement means (3).

9. Controllable micro-slit line as claimed in claims 1 and 8, **characterized in that** the displacement means (3) is a piezoelectric drive.

10. Controllable micro-slit line as claimed in one of the claims 1, 6 or 7, **characterized in that** the directly opposing membrane faces of the membrane (1; 2) are provided with a surface coating that is non-transparent for the radiation used.

11. Controllable micro-slit line as claimed in claim 10, **characterized in that** the non-transparent coating is formed by a surface deposit, which is absorbing to he radiation used.

12. Controllable micro-slit line as claimed in claim 1, **characterized in that** at identically set spaces for the slits (11) of the first membrane (1) and the positioning of the cross-barriers (st) in the second membrane (2) further equidistant sub-cross-barriers (ust) are additionally provided between the cross-barriers (st) of the second membrane (2), whereby the sub-cross-barriers have a reduced width compared to the width of the cross-barriers (st), and the width $b_1$ of the slits (11) of the first membrane (1) is defined at a reduced relation to the width of the sub-cross-barriers.

**Revendications**

1. La ligne à micro-fentes (MS) pour spectromètres est **caractérisée en ce**

    - qu'une première membrane (1) est prévue comprenant n fentes identiques (11), n étant > 2, dont la distance entre-axes (a), la largeur de la fente b1 et la longueur de fente (1) sont déterminées essentiellement par les reproductions d'images optiques et leur dimensionnement au spectromètre (S) et par la distance (e) des surfaces réceptrices individuelles (4) d'un détecteur de lignes (D) mis en application, et

    - qu'à la première membrane est attribuée une deuxième membrane (2) montée dans une distance (s) aussi petite que possible du point de vue technique, qui, dans la direction de décalage (x), est subdivisée en n secteurs ($b_{1-n}$) constitués chacun de n sous-secteurs ($b_{x1-xn}$), x =1 .n, dont la largeur est déterminée par d = $b_1$ + 2c , c étant la largeur de superposition dépendant de la distance (s) entre la première et la deuxième membrane (1;2) et l'ouverture d'une fente (11), où au moins un des sous-secteurs ($b_{x1-x7}$) de chacun des secteurs ($b_{1-n}$) étant conçu comme un pont non transparent (st) et les autres sous-secteurs comme des évidements ($h_2$) dans la membrane (2), la totalité des secteurs ($b_{1-n}$) étant identique à la totalité des fentes (11) prévues sur la première membrane (1) et

    - que la première et la deuxième membranes (1; 2) se laissent décaler, l'une par rapport à l'autre, par (n-1) pas discrets de largeur d, moyennant un dispositif de réglage (3) de manière que chacune des fentes (11), disposées dans une distance entre-axe équidistante a, a étant défini par rapport à a = n x d et étant intégrée dans la première membrane (1), devrait au moins une fois subir une fermeture optique par un des ponts (s) de la deuxième membrane (2).

2. La ligne à micro-fentes réglable selon la revendication 1 est **caractérisée en ce que** sur chacun des secteurs prévus ($b_{1-n}$) et des sous-secteurs y attribués ($b_{x1-xn}$), plusieurs de ces sous-secteurs sont conçus comme ponts non transparents (st) et les autres sous-secteurs comme des évidements (h2) aménagés sur la membrane (2), le nombre de ponts (st) par secteur (b1-n) étant toujours le même.

3. La ligne à micro-fentes réglable selon la revendication 2 est **caractérisée en ce que** le nombre des évidements (h2) par secteur ($b_{1-n}$) est toujours supérieur au nombre de ponts (st) par secteur ($b_{1-n}$).

4. La ligne à micro-fentes réglable selon les revendications 2 et 3 est **caractérisée en ce que** la position des ponts (st) prévus par secteur ($b_{1-n}$) varie de secteur ($b_1$) à secteur ($b_n$), mais que ces variations constituent toujours un multiple entier de la largeur d du pont.

**5.** La ligne à micro-fentes réglable selon les revendications 2 à 4 est **caractérisée en ce que** la répartition des ponts (st) prévus par secteur ($b_{1-n}$) est définie suivant un théorème d'Hadamard.

**6.** La ligne à micro-fentes réglable selon la revendication 1 est **caractérisée en ce que** les membranes (1; 2) avec leurs fentes (11) ou évidements (h) et leur cadre support (10; 20) sont formées par un chip microstructuré.

**7.** La ligne à micro-fentes réglable suivant la revendication 6 est **caractérisée en ce que** le chip est formé par un substrat de silicium qui au moins sur une de ses surfaces, est doté d'un système à double couches, une couche de $SiO_2$ et de $Si_3N_4$, qui ainsi forment les secteurs restants des membranes.

**8.** La ligne à micro-fentes réglable suivant la revendication 1 ou (6 et 7) est **caractérisée en ce que** la première membrane (1) est disposée de manière rigide et seule la deuxième membrane (2) se règle par le moyen de réglage (3).

**9.** La ligne à micro-fentes réglable, selon les revendications 1 et 8 est **caractérisée en ce que** le moyen de réglage (3) est constitué par un mécanisme d'entraînement piézo-électrique.

**10.** La ligne à micro-fentes réglable selon les revendications 1, 6 ou 7 est **caractérisée en ce que** les faces, qui sont directement opposées l'une par rapport à l'autre, des membranes (1;2) sont enduites à la surface d'une couche qui s'avère non transparente pour les rayonnements appliquées.

**11.** La ligne à micro-fentes réglable selon la revendication 10 est **caractérisée en ce que** l'enduit non transparent à la surface est constitué d'une matière absorbant les rayonnements appliqués.

**12.** La ligne à micro-fentes selon la revendication 1 est **caractérisée en ce que** dans le cas où les distances entre les fentes (11) de la première membrane (1) sont identiques et où les ponts (st) sur la deuxième membrane (2) sont bien définis, il y a entre les ponts (st) situés sur la deuxième membrane (2), encore des sous-ponts (ust), eux aussi équidistants, mais à largeur réduite par rapport à la largeur des ponts (st), la largeur $b_1$ des fentes (11) de la première membrane (1) étant réduite pour correspondre à la largeur des sous-ponts.

Fig. 1

MS

st

l

20

2

1

10

s

b₁

a

11

Fig. 2

Fig. 3a

Fig. 3b

Fig. 3c

Fig. 3d

Fig. 4a

sp1

Fig. 4b

sp2

Fig. 4c

sp3

Fig. 4d

sp4

Fig. 5a

Fig. 5b

Fig. 6a...g

Fig. 7a

Fig. 7b

Fig. 7c

Fig. 7d

Fig. 7e

Fig. 7f

Fig. 7g

st1

sp1                    11

Fig. 8a

ust

st1    st2

sp1                    11

Fig. 8b